# EUROPÄISCHE PATENTSCHRIFT

(11) **EP 2 226 541 B1**
(45) Veröffentlichungstag und Bekanntmachung des Hinweises auf die Patenterteilung: **20.08.2014**
(21) Anmeldenummer: 10154969.9
(22) Anmeldetag: 27.02.2010
(51) Int. Cl.: F16K 31/60

(54) **Betätigungsanordnung für Sanitärarmaturen**
Actuation assembly for sanitary fittings
Agencement d'actionnement pour armatures sanitaires

(30) Priorität: 04.03.2009 DE 102009012839
(43) Veröffentlichungstag der Anmeldung: 08.09.2010
(73) Patentinhaber: Hansgrohe SE, 77761 Schiltach (DE)
(72) Erfinder: Werner, Bernd, 78628 Rottweil-Hausen (DE)
(74) Vertreter: Patentanwälte Ruff, Wilhelm, Beier, Dauster & Partner

(56) Entgegenhaltungen:
- EP-A1- 0 778 434
- EP-A2- 1 903 268
- DE-A1- 4 308 762

## Beschreibung

Die Erfindung betrifft eine eine Betätigungsanordnung für eine Drehspindel aufweisende Sanitärarmatur.

Zur Bedienung von Einstellelementen an Sanitärarmaturen sind Drehgriffe üblich. Dies gilt beispielsweise für Thermostaten, mit deren Hilfe eine Solltemperatur des Mischwassers einer Sanitärarmatur eingestellt werden soll. Diese Drehgriffe werden nach ästhetischen Gesichtspunkten entworfen.

Bei Sanitärarmaturen ist es häufig gewünscht, ein Ventil nur bis zu einer bestimmten Position verstellen zu können, und erst nach Überwindung einer taktilen Warnung das Ventil weiter zu verstellen. Beispielsweise soll ein Ventil unter normalen Bedingungen nur bis zu einem bestimmten Öffnungsquerschnitt geöffnet werden können, wobei aber die Möglichkeit bestehen soll, es durch spezielle Maßnahmen auch weiter zu öffnen. Das gleiche gilt auch für eine Temperatureinstellung.

Es ist bereits ein Stellgriff für ein Wasserventil bekannt (EP 778434), der mit einer Drehspindel derart verbunden ist, dass er zusätzlich axial verschiebbar ist. Durch die axiale Verschiebung soll der Drehgriff mit einem axialen Vorsprung an einem Anschlag des Ventilgehäuses vorbei bewegt werden können. Ein solcher Anschlag kann beispielsweise eine bestimmte Temperatur definieren.

Bei diesem bekannten Stellgriff bleibt der Griff nach Überwinden des Anschlags in der axial verschobenen Position.

Weiterhin ist ein Stellgriff für ein Wasserventil bekannt, der eine äußere Kappe aufweist. Wird beim Verdrehen des Stellgriffs ein erster Anschlag erreicht, kann dieser dadurch überwunden werden, dass die Kappe eingedrückt wird. Sie bleibt dann in der eingedrückten Stellung, bis der Stellgriff anschließend wieder zurück verdreht wird (EP 1903268 A2).

Der Erfindung liegt die Aufgabe zu Grunde, eine Sanitärarmatur zu schaffen, bei der mindestens zwei unterschiedliche Funktionsstellungen ermöglicht werden, der Griff aber in diesen beiden Funktionsstellungen nicht unterschiedlich weit gegenüber der Sanitärarmatur vorspringt.

Zur Lösung dieser Aufgabe schlägt die Erfindung eine Sanitärarmatur mit den im Anspruch 1 genannten Merkmalen vor. Weiterbildungen der Erfindung sind Gegenstand von Unteransprüchen.

Die Sanitärarmatur die von der Erfindung vorgeschlagen wird ermöglicht die Definition der beiden Funktionen dadurch, dass ein mit dem Drehgriff mit bewegter radialer Vorsprung an einem der Drehspindel zugeordneten Anschlag zur Anlage gelangt und damit die Drehbewegung des Drehgriffs blockiert. Durch eine axiale Bewegung des Drehgriffs zusammen mit seinem Vorsprung kann dieser Vorsprung dann in eine axiale Position gebracht werden, wo er an dem Anschlag vorbei bewegt wird.

Nach dem Überwinden des Anschlags kann der Drehgriff wieder in seine Ausgangsposition zurückkehren. Dies hängt unter anderem davon ab, wie groß in Drehrichtung sowohl der Anschlag als auch der radiale Vorsprung sind.

Dies bedeutet, dass der Griff nach dem Überwinden des Anschlags, also in der zweiten Funktionsstellung, in axialer Richtung in der gleichen Position wie vor dem Überwinden des Anschlags steht.

In Weiterbildung der Erfindung kann vorgesehen sein, dass der Drehgriff in die stabile axiale Position beaufschlagt ist, insbesondere mithilfe einer Feder. Zum Überwinden des Anschlags muss der Benutzer daher den Drehgriff gegen Federkraft verschieben. Nach dem Überwinden des Anschlags kann dann die Feder den Drehgriff wieder in die stabile Positionen zurück bewegen.

Es hat sich als besonders sinnvoll herausgestellt, dass man den Drehgriff, sobald er die Stellung erreicht, in der sein Vorsprung an dem Anschlag anliegt, zum Überwinden des Anschlags drücken muss. Es ist natürlich auch denkbar, die Betätigungsanordnung so auszugestalten, dass der Griff zum Überwinden des Anschlags gezogen werden muss.

In Weiterbildung der Erfindung kann vorgesehen sein, den Griff derart zu lagern und zu beaufschlagen, dass er in jeder Drehposition in seine stabile Position zurückkehrt. Es wurde bereits erwähnt, dass der Drehgriff nach dem Überwinden des Anschlags in seine Ausgangsposition zurückkehrt. Wenn man die Umfangserstreckung von Anschlag und Vorsprung sehr klein gestaltet, kann der Winkelbereich der Drehposition, in der der Drehgriff verschoben bleibt, in Umfangsrichtung sehr klein gestaltet werden. Falls man aus bestimmten Gründen diesen Winkelbereich aber nicht so klein gestalten kann, hat die Erfindung diese Möglichkeit, nämlich auch in diesem Bereich den Drehgriff in seine Ausgangsposition zurückkehren zu lassen.

Um dies zu erreichen, ist erfindungsgemäss der Anschlag axial begrenzt bewegbar ausgebildet. Er kann dann der Bewegung des Drehgriffs in seine axiale Ausgangsposition folgen.

Diese Mitnahme des Anschlags in axialer Richtung wird dadurch erreicht, dass der radiale Vorsprung des Drehgriffs in axialer Richtung an dem Anschlag angreift und diesen damit mitnimmt.

Eine andere Möglichkeit besteht darin, den radialen Vorsprung des Drehgriffs axial verschiebbar gegenüber den Drehgriff auszubilden.

Es wurde eingangs erwähnt, dass ein solcher Anschlag zur Begrenzung einer Verstellbewegung eines Drehgriffs beispielsweise zur Begrenzung der Öffnung eines Ventils oder zur Begrenzung einer Temperatureinstellung dienen kann. Für die Verringerung der Größe einer Öffnung oder die Verringerung einer Temperatureinstellung besteht im Normalfall bei einer Sanitärarmatur keine Notwendigkeit, den Benutzer hierauf aufmerksam zu machen. Aus diesem Grunde kann erfindungsgemäß in Weiterbildung vorgesehen sein, dass die Verhinderung einer Weiterdrehung nur in einer Drehrichtung auftritt, während bei dem Zurückdrehen in umgekehrter Richtung kein Blockieren erfolgt. Um dies zu erreichen, kann die Form des Anschlags und/oder des radialen Vorsprungs so ausgestaltet werden, dass dann der Vorsprung an dem Anschlag abgleitet oder die beiden Elemente sich überwinden. Dies kann durch Schrägflächen erreicht werden.

Erfindungsgemäß kann die stabile axiale Position des Drehgriffs gegenüber der Drehspindel dadurch definiert werden, dass eine axiale in die Drehspindel eingeschraubte Befestigungsschraube mit der Unterseite ihres Schraubenkopfs die maximale axiale Bewegung des Drehgriffs definiert.

Es ist möglich, dass bei einer Verstellung einer Sanitärarmatur mehrere Positionen vorhanden sind, in denen ein Benutzer taktil auf bestimmte Dinge hingewiesen werden soll. Zu diesem Zweck kann die Betätigungsanordnung mehrere Anschläge aufweisen, wobei dann ein radialer Vorsprung des Griffs mit den mehreren Anschlägen zusammen wirken kann, die in unterschiedlichen Drehpositionen angeordnet sind.

Ebenfalls möglich ist es auch, dass mehrere radiale Vorsprünge des Griffs in unterschiedlichen Drehpositionen vorhanden sind, die mit einem Anschlag zusammen wirken.

Es sind auch Kombinationen beider Anordnungen möglich.

Selbstverständlich ist es auch denkbar, mehrere Anschläge und/oder Vorsprünge an der gleichen Winkelposition aber in unterschiedlichen axialen Positionen anzuordnen, wenn aus Stabilitätsgründen ein Anschlag als nicht ausreichend angesehen wird.

Insbesondere kann in Weiterbildung der Erfindung vorgesehen sein, dass der radiale Vorsprung des Griffs an einer einen Teil des Griffs bildenden oder mit ihm verbundenen Hülse angeordnet ist, insbesondere an der Innenseite einer solchen Hülse.

In Weiterbildung kann ebenfalls vorgesehen sein, dass der Anschlag an der Außenseite einer Hülse angeordnet ist, die drehfest mit der Sanitärarmatur verbunden ist. Diese Hülse kann axial begrenzt verschiebbar gelagert sein.

In nochmaliger Weiterbildung kann vorgesehen sein, dass in axialer Richtung zwischen diesen beiden Hülsen eine Feder angeordnet ist, die beide Hülsen voneinander weg beaufschlagt.

Weitere Merkmale, Einzelheiten und Vorzüge der Erfindung ergeben sich aus den Ansprüchen deren.

Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: einen Axialschnitt durch eine Betätigungsanordnung einer Sanitärarmatur in einer ersten Position;
- Figur 2: die teilweise aufgebrochene Seitenansicht der Anordnung in Figur 1;
- Figur 3: eine teilweise geschnittene Ansicht des Drehgriffs in der Position der Figur 1;
- Figur 4: die Ansicht des Drehgriffs nach Weiterdrehung im Gegenuhrzeigersinn;
- Figur 5: eine der Figur 1 entsprechende Darstellung in der der Figur 4 entsprechenden Position;
- Figur 6: die der Figur 2 entsprechende Darstellung in der Position der Figur 5;
- Figur 7: eine der Figur 1 entsprechende Darstellung nach dem Drücken des Drehgriffs;
- Figur 8: die der Figur 2 entsprechende Darstellung in der Position der Figur 7;
- Figur 9: den Drehgriff in der Position der Figur 7;
- Figur 10: die Ansicht des Drehgriffs nach dem Überwinden der Position der Figur 8;
- Figur 11: eine der Figur 1 entsprechende Darstellung in der Position des Drehgriffs der Figur 10;
- Figur 12: die der Figur 2 entsprechende Darstellung der Betätigungsanordnung in der Position der Figur 10 und 11;
- Figur 13: den Schnitt durch die Betätigungsanordnung nach dem Überwinden des Anschlags;
- Figur 14: die der Figur 2 entsprechende Darstellung der Position der Figur 13;
- Figur 15: die Ansicht des Drehgriffs in der Position der Figur 13 und 14;
- Figur 16: einen der Figur 1 entsprechenden Schnitt bei einer geänderten Ausführungsform;
- Figur 17: einen der Figur 11 entsprechenden Schnitt durch die Ausführungsform der Figur 16.

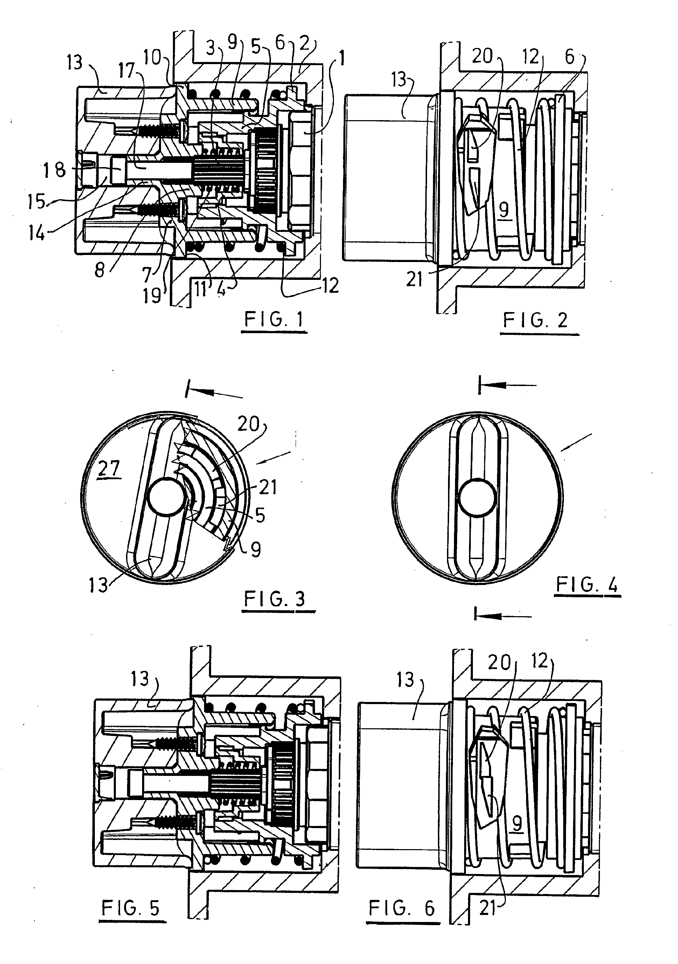

In Figur 1 ist in einem Schnitt die Betätigungsanordnung nach der Erfindung dargestellt. Zur Betätigung der Sanitärarmatur, die in Figur 1 nicht dargestellt ist, dient eine Drehspindel, die mit der Sanitärarmatur verbunden ist. Hierzu dient eine Mutter 1, die innerhalb eines Gerätegehäuses 2 zu liegen kommt. Aus dieser Mutter heraus erstreckt sich der Schaft 3 der Drehspindel, der eine Längsverrippung aufweist. Der Schaft 3 ist von einer Innenhülse 4 umgeben, die einen Zwischenraum mit der Außenseite des Schafts 3 der Drehspindel bildet. Außerhalb der Innenhülse 4 ist eine Zwischenhülse 5 angeordnet, die in ihrem der Sanitärarmatur zugewandten Endbereich auf die Mutter 1 aufgesetzt ist und daher drehfest relativ zu der Mutter 1 angeordnet ist. Die drehfeste Festlegung geschieht über die Verzahnung seitlich der Mutter 1.

In ihrem der Sanitärarmatur zugewandten Endbereich weist die Zwischenhülse 5 einen nach außen gerichteten Flansch 6 auf.

Auf den Schaft 3 der Drehspindel ist ein Grifftopf 7 aufgesetzt. Dieser Grifftopf 7 weist eine Nabe 8 mit einer Öffnung auf, in die der Schaft 3 der Drehspindel mit seiner Längsverrippung drehfest eingreift. Der Topfboden des Grifftopfs 7 weist eine Hülse 9 auf, die außerhalb der Zwischenhülse 5 verläuft und in etwa bündig mit dem Endbereich der Zwischenhülse 5 verläuft. Der Topfboden weist radial außerhalb der Hülse 9 einen Flansch 10 mit einer Anlagefläche 11 auf. Zwischen dieser Anlagefläche 11 des Flanschs 10 der Hülse 9 und dem Flansch 6 der Zwischenhülse 5 erstreckt sich eine Druckfeder 12.

Von der Innenseite des Topfbodens her ist mit der Außenseite des Grifftopfs 7 ein Knebelgriff 13 mithilfe zweier Schrauben verschraubt. Die Ausrichtung des Knebelgriffs 13 gegenüber dem Grifftopf 7 geschieht über einen axialen Vorsprung 14 des Grifftopfs 7, der in eine axiale Öffnung 15 des Knebelgriffs 13 eingreift. Die axiale Öffnung 15 ist von der Außenseite des Knebelgriffs 13 mit einem Stopfen verschlossen.

Durch das Eingreifen des Schafts 3 der Drehspindel in die Öffnung der Nabe 8 ist der Drehgriff drehfest mit der Drehspindel verbunden.

In die Drehspindel ist axial eine Schraube 17 eingeschraubt. Die Schraube 17 ist in ihrer axialen Position gesichert, beispielsweise dadurch, dass sie auf dem Boden eines Sacklochs in der Drehspindel zur Anlage kommt. Der in Figur 1 zu sehende Bereich des Schraubenschafts ist gewindefrei ausgebildet. Die Unterseite des Schraubenkopfs 18 bildet eine Anlagefläche für das Stirnende des axialen Vorsprungs 14 des Grifftopfs 7.

In dem Zwischenraum zwischen der Innenhülse 4 und dem Schaft 3 der Drehspindel ist eine Druckfeder 19 eingesetzt, die sich auf einem Boden der Innenhülse 4 abstützt und die Nabe 8 des Grifftopfs 7 von der Sanitärarmatur weg beaufschlagt. Dadurch wird die in Figur 1 dargestellte Position des Griffs durch die Anlage dieses Vorsprungs 8 an der Unterseite des Schraubenkopfs 18 begrenzt und definiert.

Ein Benutzer kann durch Drücken auf den Griff 13 diesen gegen die Wirkung der Druckfeder 19 und der Druckfeder 12 nach innen verschieben.

Die Ansicht der Figur 3 zeigt den Griff von links in Figur 1. Ein Teil der Figur ist geschnitten. Der Schnitt ist unmittelbar unterhalb des Topfbodens des Grifftopfs 7 gelegt. An der Außenseite der Zwischenhülse 5 ist ein Anschlag 20 angeformt. Dieser erstreckt sich über einen gewissen Winkelbereich und füllt den Raum zwischen der Zwischenhülse 5 und der Außenhülse 9 etwa aus. An der Innenseite der Außenhülse 9 ist ein Vorsprung 21 angeformt, der sich ebenfalls über einen gewissen Winkelbereich erstreckt.

Die Figur 2 zeigt die Anordnung innerhalb des Gerätegehäuses 2 in Seitenansicht, wobei hier ein Teil der Außenhülse 9 aufgerissen ist. Durch diesen Aufriss sieht man den Anschlag 20 und dem Vorsprung 21, die gerade unter Bezugnahme auf Figur 3 erläutert wurden. Die Figur 2 zeigt die Anordnung der beiden Elemente, nämlich des radialen Vorsprungs 21 und des Anschlags 20 in der Position des Knebelgriffs 13 der Figur 3. In axialer Position liegen der Vorsprung 21 und der Anschlag 20 an der gleichen Stelle. Wird nun der Knebelgriff 13 gegenüber der Position der Figur 3 im Gegenuhrzeigersinn in die Position der Figur 4 verdreht, so gelangt die in Drehrichtung vordere Fläche 22 des Vorsprungs 21 zur Anlage an der gegenüberliegenden Fläche des Anschlags 20, so dass sich der Abstand zwischen diesen beiden Elementen, der in Figur 2 noch vorhanden ist, verringert. Dies ist in Figur 5 und Figur 6 dargestellt. In dieser Position ist ein Weiterdrehen des Knebelgriffs 13 nicht mehr möglich.

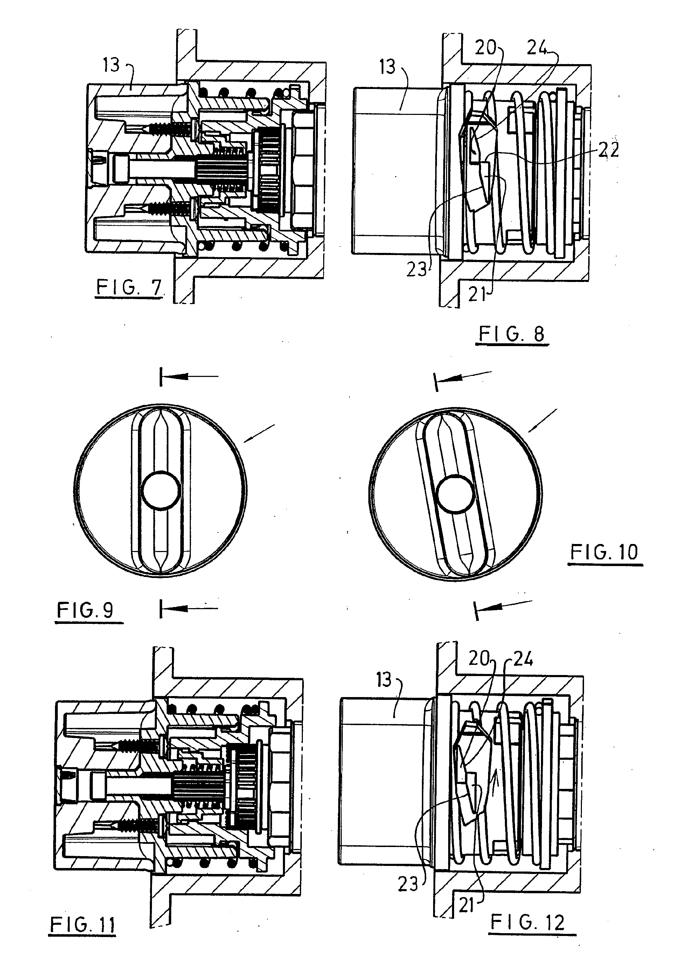

Wie bereits erwähnt wurde, ist es möglich, den Knebelgriff 13 in das Gerätegehäuse 2 hinein zu drücken. Dies ist in Figur 7 und Figur 8 dargestellt. Der Vorsprung 21 ist jetzt in axialer Richtung an dem Anschlag 20 vorbei geschoben worden, so dass jetzt der Knebelgriff 13 aus der Position der Figur 9 in die Position der Figur 10 weiter verdreht werden kann. Dabei gelangt die nach außen gerichtete Vorderseite des Vorsprungs 21 zur Anlage an der nach hinten gerichteten Rückseite des Anschlags 20. Dies ist in Figur 12 dargestellt. Da aber der Vorsprung 20 an der Zwischenhülse 5 angeformt ist, und die Zwischenhülse 5 auf der Mutter 1 nur drehfest festgelegt ist, kann jetzt die Druckfeder 19 nicht nur den Vorsprung 21, sondern durch Mitnahme auch den Anschlag 20 nach außen bewegen, so dass der Topfboden 7 der Griffanordnung wieder mit seiner Außenseite bündig mit der Außenseite des Gerätegehäuses 2 verläuft. Damit ist sichergestellt, dass auch in der Zwischenstellung, in der Vorsprung 21 und Anschlag 20 aneinander Anliegen, dennoch der Griff in seine axiale Endposition zurückkehrt.

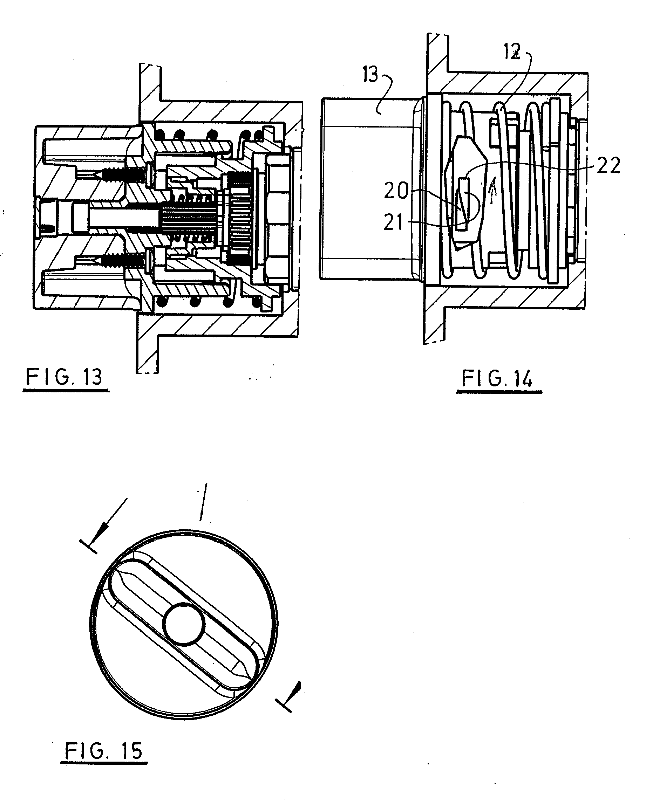

Bei dem weiteren Verdrehen des Knebelgriffs 13 aus der Position der Figur 10 in die Position der Figur 15 gleiten die Schrägfläche 23 an der axialen Vorderseite des Vorsprungs 21 und die Schrägfläche 24 an der Rückseite des Anschlags 20 aneinander ab, so dass jetzt die Zwischenhülse 5 durch die Wirkung der Druckfeder 12 wieder in ihre Ausgangsposition bewegt wird.

Beim Verdrehen in umgekehrter Richtung erfolgt ein Aufgleiten der beiden erwähnten Schrägflächen 23, 24, so dass keine Verhinderung der Weiterbewegung stattfindet. Aber auch in Richtung dieser Drehbewegung ist ständig dafür gesorgt, dass die Außenseite des Topfbodens des Grifftopfs 7 immer an der gleichen axialen Position angeordnet ist, also immer bündig mit der Außenseite des Gerätegehäuses 2.

In der dargestellten Ausführungsform wird beim Verdrehen des Knebelgriffs 13 ausgehend von der Position der Figur 3 im Gegenuhrzeigersinn in die Position der Figur 4 ein Weiterdrehen verhindert. Dies wird durch die Gestaltung der Endflächen 22 beziehungsweise der Stirnfläche des Anschlags 20 bewirkt. Es ist auch möglich, den Vorsprung 21 und den Anschlag 20 so zu gestalten, dass ein Weiterdrehen nicht verhindert, sondern nur behindert wird. Auch in diesem Fall kann durch die Maßnahmen der Erfindung dafür gesorgt werden, dass die axiale Position des Knebelgriffs 13 immer beibehalten bleibt.

Die in Figur 1 dargestellte Position des Knebelgriffs 13, die durch das Anliegen des Vorsprungs 14 an der Unterseite des Schraubenkopfs 18 definiert ist, ist die stabile axiale Position des Knebelgriffs 13.

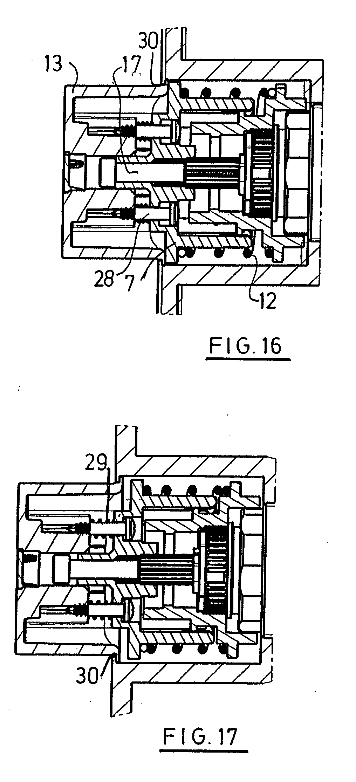

Während bei der bisher behandelten Ausführungsform der Grifftopf 7 mithilfe der in den Schnitten dargestellten Schrauben fest mit dem Knebelgriff 13 verbunden ist, zeigt die Figur 16 den Schnitt durch eine Ausführungsform, bei der der Knebelgriff 13 axial beweglich mit dem Grifftopf 7 verbunden ist. Zwei Schrauben 28 greifen durch axiale Bohrungen in dem Boden des Grifftopfs 7 hindurch und sind mit ihrem vorderen Ende in den Knebelgriff 13 eingeschraubt. Zwischen dem Knebelgriff 13 und dem Boden des Grifftopfs 7 sind Druckfedern 29 eingesetzt, die die Schrauben 28 umgeben. Diese Druckfedern 29 drücken den Knebelgriff 13 von dem Grifftopf 7 weg. Die Bewegung des Knebelgriffs 13 nach außen ist durch die Anlage eines äußeren Rands 30 des Knebelgriffs 13 an einem Hinterschnitt begrenzt. Zum Überwinden des Anschlags wird der Knebelgriff 13 nach innen gedrückt und verdreht, genauso wie bei der vorhergehenden Ausführungsform, so dass dies nicht nochmals dargestellt wird. Sobald der Vorsprung 21 an der Rückseite des Anschlags 20 anliegt und der Benutzer den Knebelgriff 13 loslässt, wird jetzt unter Wirkung der Federn 29 der Knebelgriff 13 nach vorne geschoben, während der Grifftopf 7 zusammen mit der äußeren Hülse 9 in der nach innen verschobenen Position bleibt. Dies ist in Figur 17 dargestellt, die damit also dem Schnitt der Figur 11 entspricht. Auch auf diese Weise wird erreicht, dass der Knebelgriff 13 in der Ausgangsposition bleibt beziehungsweise in diese zurückkehrt. Der den Knebelgriff 13 umgebende flache Abschnitt 27, siehe Figur 3, schließt damit die Vertiefung ab, in der die Anordnung untergebracht ist.

Eine Betätigungsanordnung für eine Drehspindel einer Sanitärarmatur enthält drehfest der Sanitärarmatur zugeordnet einen radialen Anschlag und einen an dem Drehgriff angeordneten mit diesem verdrehbaren radial vorspringenden Vorsprung, die in der gleichen axialen Position angeordnet sind. Beim Verdrehen gelangt der Vorsprung des Drehgriffs in einer bestimmten Position zur Anlage an dem Anschlag. Die Anlage kann dadurch überwunden werden, dass der Drehgriff gedrückt wird, so dass der Vorsprung hinter dem Anschlag vorbei bewegt werden kann. Nach dem Überwinden des Anschlags kehrt der Drehgriff in seine vor dem Drücken eingenommene Ausgangsposition in axialer Richtung zurück.

Erfindungsgemäss wird der Anschlag durch den Vorsprung axial bewegt, so dass auch bei dem Uberwinden des Anschlags der Drehgriff in seine Ausgangsposition zurückkehrt.

## Patentansprüche

1. Sanitärarmatur mit einer Betätigungsanordnung für diese, bei der
1.1 die Sanitärarmatur durch eine Drehspindel betätigbar ist und
1.2 einen drehfest mit ihr verbundenen Anschlag (20) aufweist, sowie mit
1.3 einem Drehgriff (13), der
1.4 drehfest und
1.5 axial begrenzt bewegbar an der Drehspindel befestigt ist,
1.6 eine stabile axiale Position und
1.7 einen radialen Vorsprung (21) aufweist, der
1.8 bei Verdrehung des Drehgriffs (13) in seiner stabilen axialen Position auf den Anschlag (20) zur Behinderung oder Verhinderung seiner Weiterdrehung trifft und
1.9 durch axiale Bewegung des Drehgriffs (13) außer Eingriff mit dem Anschlag (20) bewegbar ist, wobei
1.10 der Anschlag (20) begrenzt axial bewegbar angeordnet ist und
1.11 durch axialen Angriff des radialen Vorsprungs (21) des Drehgriffs (13) derart axial bewegbar ist, dass der Drehgriff (13) in seine stabile Position bewegbar ist.

2. Sanitärarmatur nach Anspruch 1, bei der der Drehgriff (13) in die stabile axiale Position beaufschlagt ist, insbesondere federbeaufschlagt.

3. Sanitärarmatur nach Anspruch 1 oder 2, bei der der Drehgriff (13) zur Überwindung des Anschlags (20) in Richtung auf die Sanitärarmatur gedrückt werden muss.

4. Sanitärarmatur nach einem der vorhergehenden Ansprüche, bei der der Griff (13) derart gelagert und beaufschlagt ist, dass er in jeder Drehposition in seine stabile axiale Position zurückkehrt.

5. Sanitärarmatur nach einem der vorhergehenden Ansprüche, bei der der Anschlag (20) und/oder der radiale Vorsprung (21) derart aufeinander abgestimmt sind, dass eine Verhinderung der Weiterdrehung nur in einer Drehrichtung auftritt.

6. Sanitärarmatur nach einem der vorhergehenden Ansprüche, bei der die stabile axiale Position des Drehgriffs (13) durch eine axiale Befestigungsschraube (17) der Drehspindel definiert ist.

7. Sanitärarmatur nach einem der vorhergehenden Ansprüche, mit mehreren Anschlägen (20) vorzugsweise unterschiedlicher Winkelposition.

8. Sanitärarmatur nach einem der vorhergehenden Ansprüche, mit mehreren radialen Vorsprüngen (21) des Drehgriffs (13) vorzugsweise unterschiedlicher Winkelposition.

9. Sanitärarmatur nach einem der vorhergehenden Ansprüche, bei der der radiale Vorsprung (21) des Drehgriffs (13) an der Innenseite einer mit dem Drehgriff (13) verbundenen Hülse (9) ausgebildet ist.

10. Sanitärarmatur nach einem der vorhergehenden Ansprüche, bei der der Anschlag (20) an der Außenseite einer Hülse (5) ausgebildet ist, die beispielsweise axial verschiebbar ausgebildet ist und bei der ggf. eine Druckfeder (12) zwischen der dem Drehgriff (13) zugeordneten Hülse (9) und der der den Anschlag (20) aufweisenden Hülse (5) angeordnet ist.

11. Sanitärarmatur nach einem der vorhergehenden Ansprüche, bei der der dem Drehgriff (13) zugeordnete Vorsprung (21) in Axialrichtung unverschiebbar mit dem Drehgriff (13) verbunden ist.

12. Sanitärarmatur nach einem der Ansprüche 1 bis 10, bei der der dem Drehgriff (13) zugeordnete Vorsprung (21) in Axialrichtung begrenzt verschiebbar mit dem Drehgriff (13) verbunden ist.

## Claims

1. Sanitary fitting comprising an actuating arrangement therefor, wherein
1.1 the sanitary fitting can be actuated by a rotary spindle and
1.2 has a stop (20) connected in a rotationally fixed manner thereto, and comprising
1.3 a rotary handle (13) which
1.4 is fastened in a rotationally fixed manner and
1.5 such that it is movable axially to a limited extent to the rotary spindle, and has 1.6 a stable axial position and
1.7 a radial projection (21) which,
1.8 when the rotary handle (13) is rotated in the stable axial position thereof, strikes against the stop (20)in order to obstruct or prevent further rotation thereof, and
1.9 can be brought out of engagement with the stop (20) by axial movement of the rotary handle (13),
1.10 wherein the stop (20)is arranged such that it is movable to a limited extent axially, and
1.11 is movable axially by an axial engagement with the radial projection (21) of the rotary handle (13) in such a manner that the rotary handle (13) is movable into the stable position thereof.

2. Sanitary fitting according to Claim 1, wherein the rotary handle (13) is loaded, in particular spring-loaded, into the stable axial position.

3. Sanitary fitting according to Claim 1 or 2, wherein the rotary handle (13) has to be pressed in the direction of the sanitary fitting in order to overcome the stop (20). in the direction of the sanitary fitting in order to overcome the stop (20).

4. Sanitary fitting according to one of the preceding claims, wherein the handle (13) is mounted and loaded in such a manner that it returns into the stable axial position thereof in every rotary position.

5. Sanitary fitting according to one of the preceding claims, wherein the stop (20) and/or the radial projection (21) are coordinated with each other in such a manner that further rotation is prevented only in one direction of rotation.

6. Sanitary fitting according to one of the preceding claims, wherein the stable axial position of the rotary handle (13) is defined by an axial fastening screw (17) of the rotary spindle.

7. Sanitary fitting according to one of the preceding claims, with a plurality of stops (20) preferably of differing angular position.

8. Sanitary fitting according to one of the preceding claims, with a plurality of radial projections (21) of the rotary handle (13) preferably of differing angular position.

9. Sanitary fitting according to one of the preceding claims, wherein the radial projection (21) of the rotary handle (13) is formed on the inner side of a sleeve (9) connected to the rotary handle (13).

10. Sanitary fitting according to one of the preceding claims, wherein the stop (20) is formed on the outer side of a sleeve (5), which is e.g. designed such that it is displaceable axially, and wherein a compression spring (12) may be arranged between the sleeve (9) assigned to the rotary handle (13) and the sleeve (5) having the stop (20).

11. Sanitary fitting according to one of the preceding claims, wherein the projection (21) which is assigned to the rotary handle (13) is connected to the rotary handle (13) such that it is non-displaceable in the axial direction.

12. Sanitary fitting according to one of claims 1 to 10, wherein the projection (21) which is assigned to the rotary handle (13) is connected to the rotary handle (13) such that it is displaceable in the axial direction to a limited extent.

## Revendications

1. Robinet sanitaire comprenant un agencement d'actionnement pour celui-ci, dans lequel
1.1 le robinet sanitaire peut être actionné par une broche rotative et
1.2 présente une butée (20) connectée de manière solidaire en rotation à celle-ci ainsi
1.3 qu'une poignée rotative (13), qui
1.4 est fixée de manière solidaire en rotation et
1.5 de façon à pouvoir être déplacée de manière limitée axialement à la broche rotative,
1.6 présente une position axiale stable et
1.7 une saillie radiale (21), qui,
1.8 lors de la rotation de la poignée rotative (13) dans sa position axiale stable, vient en contact avec la butée (20) pour empêcher ou bloquer la poursuite de sa rotation et
1.9 peut être amenée hors d'engagement avec la butée (20) par déplacement axial de la poignée rotative (13),
1.10 la butée (20) étant disposée de manière déplaçable axialement dans une mesure limitée et
1.11 pouvant être déplacée axialement par engagement axial de la saillie radiale (21) de la poignée rotative (13) de telle sorte que la poignée rotative (13) puisse être déplacée dans sa position stable.

2. Robinet sanitaire selon la revendication 1, dans lequel la poignée rotative (13) est sollicitée dans la position axiale stable, en particulier est sollicitée par ressort.

3. Robinet sanitaire selon la revendication 1 ou 2, dans lequel la poignée rotative (13) doit être pressée dans la direction du robinet sanitaire afin de surmonter la butée (20).

4. Robinet sanitaire selon l'une quelconque des revendications précédentes, dans lequel la poignée (13) est montée et sollicitée de telle sorte qu'elle revienne dans chaque position de rotation dans sa position axiale stable.

5. Robinet sanitaire selon l'une quelconque des revendications précédentes, dans lequel la butée (20) et/ou la saillie radiale (21) sont adaptées l'une à l'autre de telle sorte qu'un blocage de la poursuite de la rotation ne s'effectue que dans un sens de rotation.

6. Robinet sanitaire selon l'une quelconque des revendications précédentes, dans lequel la position axiale stable de la poignée rotative (13) est définie par une vis de fixation axiale (17) de la broche rotative.

7. Robinet sanitaire selon l'une quelconque des revendications précédentes, comprenant plusieurs butées (20), de préférence de positions angulaires différentes.

8. Robinet sanitaire selon l'une quelconque des revendications précédentes, comprenant plusieurs saillies radiales (21) de la poignée rotative (13), de préférence de positions angulaires différentes.

9. Robinet sanitaire selon l'une quelconque des revendications précédentes, dans lequel la saillie radiale (21) de la poignée rotative (13) est réalisée au niveau du côté intérieur d'une douille (9) connectée à la poignée rotative (13).

10. Robinet sanitaire selon l'une quelconque des revendications précédentes, dans lequel la butée (20) est réalisée au niveau du côté extérieur d'une douille (5) qui est par exemple réalisée de manière déplaçable axialement et dans lequel éventuellement un ressort de compression (12) est disposé entre la douille (9) associée à la poignée rotative (13) et la douille (5) présentant la butée (20).

11. Robinet sanitaire selon l'une quelconque des revendications précédentes, dans lequel la saillie (21) associée à la poignée rotative (13) est connectée à la poignée rotative (13) de manière non déplaçable dans la direction axiale.

12. Robinet sanitaire selon l'une quelconque des revendications 1 à 10, dans lequel la saillie (21) associée à la poignée rotative (13) est connectée à la poignée rotative (13) de manière déplaçable dans une mesure limitée dans la direction axiale.
